# EUROPÄISCHE PATENTSCHRIFT

(11) **EP 1 187 891 B1**
(45) Veröffentlichungstag und Bekanntmachung des Hinweises auf die Patenterteilung: **07.05.2003**
(21) Anmeldenummer: 00938791.1
(22) Anmeldetag: 15.06.2000
(51) Int. Cl.: C10J 3/16, C10B 53/00

(54) **VERFAHREN UND VORRICHTUNG ZUR ENTSORGUNG VON ABFALLGÜTERN**
METHOD AND DEVICE FOR DISPOSING OF WASTE PRODUCTS
PROCEDE ET DISPOSITIF D'ELIMINATION DE DECHETS

(30) Priorität: 22.06.1999 DE 19928581
(43) Veröffentlichungstag der Anmeldung: 20.03.2002
(73) Patentinhaber: THERMOSELECT AKTIENGESELLSCHAFT, FL-9490 Vaduz (LI)
(72) Erfinder: KISS, Günter, H., CH-6648 Minusio (CH)
(74) Vertreter: Pfenning, Meinig & Partner GbR
(86) Internationale Anmeldenummer: EP0005490
(87) Internationale Veröffentlichungsnummer: WO00078896

(56) Entgegenhaltungen:
- EP-A- 0 520 086
- DE-A- 2 526 947
- DE-A- 4 311 769
- DE-A- 19 750 841
- DE-C- 4 040 377

## Beschreibung

Die vorliegende Erfindung bezieht sich auf ein Verfahren und eine Vorrichtung zur Entsorgung und Nutzbarmachung von Abfallgütern aller Art, bei dem unsortierter, unbehandelter, beliebige Schadstoffe in fester und/oder flüssiger Form enthaltender Industrie-, Haus- und Sondermüll sowie Industriegüterwracks einer Temperaturbeaufschlagung unterzogen werden nach dem Oberbegriff des Patentanspruchs 1 bzw. des Patentanspruchs 14.

Die bekannten Verfahren der Abfallentsorgung bilden keine befriedigende Lösung der wachsenden Müllprobleme, die ein wesentlicher Faktor der Umweltzerstörung sind. Industriegüterwracks aus Verbundwerkstoffen, wie Kraftfahrzeuge und Haushaltsgeräte aber auch Öle, Batterien, Lacke, Farben, toxische Schlämme, Medikamente und Krankenhausabfälle, unterliegen gesonderten, gesetzlich streng vorgeschriebenen Entsorgungsmaßnahmen.

Hausmüll hingegen ist ein unkontrolliertes heterogenes Gemisch, das nahezu alle Arten von Sondermüllfraktionen und organischen Bestandteilen enthalten kann und ist bezüglich der Entsorgung noch in keinem Verhältnis zu seiner Umweltbelastung eingestuft.

Eines der Entsorgungs- und Verwertungsverfahren für Abfallgüter ist die Müllverbrennung. Bei den bekannten Müllverbrennungsanlagen durchlaufen die Entsorgungsgüter ein breites Temperaturfeld bis zu ca. 1000 °C. Bei diesen Temperaturen sollen mineralische und metallische Reststoffe nicht aufgeschmolzen werden, um nachfolgende Gaserzeugungsstufen möglichst nicht zu stören. Die den verbleibenden Feststoffen innewohnende Energie wird nicht oder nur mangelhaft genutzt.

Eine kurze Verweilzeit des Mülls bei höheren Temperaturen und die hohe Staubentwicklung durch die Vorgabe großer Mengen stickstoffreicher Verbrennungsluft in die unverdichteten Abfallverbrennungsgüter begünstigen die gefährliche Bildung von chlorierten Kohlenwasserstoffen. Man ist deshalb dazu übergegangen, die Abgase von Müllverbrennungsanlagen einer Nachverbrennung bei höheren Temperaturen zu unterziehen. Um die hohen Investitionen solcher Anlagen zu rechtfertigen, werden die abrasiven und korrosiven heißen Abgase mit ihrem hohen Staubanteil durch Wärmetauscher geleitet. Bei der relativ langen Verweilzeit im Wärmetauscher bilden sich erneut chlorierte Kohlenwasserstoffe, die sich mit den mitgeführten Stäuben verbinden und letztlich zu Verstopfungen und Funktionsstörungen führen und als hochgiftige Schadstoffe entsorgt werden müssen. Folgeschäden und die Kosten ihre Beseitigung sind nicht abschätzbar.

Bisherige Pyrolyseverfahren in konventionellen Reaktoren haben ein der Müllverbrennung ähnlich breites Temperaturspektrum. In der Vergasungszone herrschen hohe Temperaturen. Die sich bildenden heißen Gase werden zur Vorwärmung des noch nicht pyrolysierten Entsorgungsgutes genutzt, kühlen hierbei ab und durchlaufen ebenfalls den für die Neubildung chlorierter Kohlenwasserstoffe relevanten und damit gefährlichen Temperaturbereich. Um ein ökologisch bedenkenlos nutzbares Reingas herzustellen, durchlaufen Pyrolysegase im Regelfall vor der Reinigung einen Cräcker.

Gemeinsam weisen die vorgeschriebenen Verbrennungsund Pyrolyseverfahren den Nachteil auf, daß sich die bei der Verbrennung oder pyrolytischen Zersetzung verdampften Flüssigkeiten oder Feststoffe mit den Verbrennungs- oder Pyrolysegasen vermischen und abgeleitet werden, bevor Sie die zur Zerstörung aller Schadstoffe notwendige Temperatur und Verweilzeit im Reaktor erreicht haben. Das verdampfte Wasser ist nicht zur Wassergasbildung nutzbar gemacht. Deshalb werden im Regelfall bei Müllverbrennungsanlagen Nachverbrennungskammern und bei Pyrolyseanlagen Cräckerstufen nachgeschaltet.

Aus der ER-A-0520086 ist ein Verfahren zur Entsorgung und Nutzbarmachung von Abfallgütern bekannt, das die oben geschilderten Nachteile vermeidet. Dabei werden die Abfallgüter einer stufenweisen Temperaturbeaufschlagung und thermischen Trennung bzw. Stoffumwandlung unterzogen und die anfallenden festen Rückstände in eine Hochtemperaturschmelze überführt.

Hierzu wird das zu entsorgende Gut chargenweise zu Kompaktpaketen komprimiert und durchläuft die Temperaturbehandlungsstufen in Richtung steigender Temperatur von einer Niedertemperaturstufe, in der unter Aufrechterhaltung der Druckbeaufschlagung ein formund kraftschlüssiger Kontakt mit den Wänden des Reaktionsgefäßes sichergestellt ist und organische Bestandteile entgast werden, zu einer Hochtemperaturzone, in der das entgaste Entsorgungsgut eine gasdurchlässige Schüttung ausbildet und durch kontrollierte Zugabe von Sauerstoff Synthesegas erzeugt wird. Dieses Synthesegas wird dann aus der Hochtemperaturzone abgeleitet und kann weiter verwertet werden.

Aus der DE-A-2 526 947 ist ein zweistufiges Verfahren zur Beseitigung von Abfallgütern mit einer Schwelstufe und Hochtemperaturbehandlung bekannt.

Nachteilig an diesem Verfahren ist, daß die Verwertbarkeit des Synthesegases durch seine sich zeitlich ändernde Zusammensetzung eingeschränkt ist. So wird beispielsweise in Wasserstoffgeneratoren die vollständige Verbrennung des erzeugten Wasserstoffs nur dann erreicht, wenn der Wasserstoffgehalt des zugeführten Verbrennungsgases innerhalb geringer Grenzen konstant ist. Ansonsten neigen z.B. Wasserstoffmotoren zum Klopfen. Weiterhin schwankt der Volumenstrom des erzeugten Synthesegases bei diesem bekannten Verfahren abhängig von der Müllzusammensetzung und der dadurch bedingten unterschiedlichen Führung des Verbrennungsvorganges.

Aufgabe der vorliegenden Erfindung ist es daher, ausgehend von dem genannten Verfahren, dieses zu verbessern, so daß eine wirtschaftliche und störungsfreie Verwertung des gewonnenen Synthesegases möglich wird. Diese Aufgabe wird durch das Verfahren nach dem Oberbegriff des Anspruchs 1 sowie durch die Vorrichtung nach dem Oberbegriff des Anspruchs 14 in Verbindung mit ihren jeweiligen kennzeichnenden Merkmalen gelöst. Vorteilhafte Weiterbildungen des erfindungsgemäßen Verfahrens und der erfindungsgemäßen Vorrichtung werden in den abhängigen Ansprüchen gegeben.

Das erfindungsgemäße Verfahren schließt sich an das in der EP-A-0 520 086 offenbarte Verfahren an, wobei bezüglich des Verfahrens und der Vorrichtung die Offenbarung dieser Druckschrift hiermit vollständig in den Offenbarungsgehalt dieser Anmeldung eingeschlossen wird. Das dort beschriebene Verfahren und die dort beschriebene Vorrichtung werden erfindungsgemäß nunmehr dadurch weitergebildet, daß die Konzentration des Wasserstoffs in dem abgeleiteten Synthesegas erfaßt und gesteuert wird. Dadurch wird nunmehr der Einsatz des aus diesem Müllverwertungsverfahren gewonnenen Synthesegases für verschiedene Verwendungen in der chemischen Industrie bzw. bei der thermischen Nutzung möglich. So kann dieses Synthesegas in Wasserstoffmotoren problemlos eingesetzt werden.

Die Messung des Wasserstoffgehaltes kann beispielsweise durch Messung des Druckverlustes beim Volumenstrom erfolgen, der umgekehrt proportional zum Volumenstrom selbst ist. Ist der Wasserstoffgehalt zu hoch, so kann über Sauerstofflanzen in die Gasphase der Hochtemperaturzone oberhalb der Schüttung Sauerstoff eingedüst werden, wodurch sich eine zusätzliche Verbrennung des Wasserstoffs ergibt und der Wasserstoffgehalt in dem Synthesegas sinkt. Die umgekehrte Regelung ist selbstverständlich ebenfalls möglich durch Zugabe von Brenngas. Insgesamt ergibt sich durch diese Weiterbildung des bekannten Thermoselect-Verfahrens die Möglichkeit der Nutzung des Wasserstoffgehaltes aus dem Synthesegas für die stoffliche als auch energetische Nutzung, beispielsweise in Gasmotoren oder Brennstoffzellen.

Für letztere Anwendungen wird die Konzentration an Wasserstoff idealerweise auf ca. 35 Vol.%. Der Volumenstrom wird dabei auf ca. 1000 bis 1600 Nm³ bezogen auf einen Durchsatz von 1 Mg Entsorgungsgut eingeregelt.

Idealerweise wird der Gehalt an Wasserstoff nach der Reinigung des Synthesegases erst nach der schockartigen Kühlung bestimmt, die die Neubildung von Schadstoffen während der Abkühlphase des Synthesegases verhindert. Dadurch wird der tatsächliche Gehalt an Wasserstoff des abgeleiteten und nach außen abgegebenen Synthesegases geregelt.

Diese Gasschnellkühlung (Quench) erfolgt vorteilhafterweise durch das Einsprühen von kaltem Wasser, beispielsweise in temperaturstabilisierten Wasser-Kreislaufsystemen, in den abgeleiteten Synthesegasstrom, wodurch das Synthesegas schockartig abgekühlt wird und weiterhin die Staubpartikel aus dem Synthesegasgemisch entfernt werden.

Der Volumenstrom des Synthesegasgemisches kann auch dadurch eingeregelt werden, daß am Auslaß für das Synthesegasgemisch für die weitere Verwertung eine Drosseleinrichtung, beispielsweise eine regelbare Drosselklappe angeordnet ist.

Im folgenden werden einige Beispiele für das erfindungsgemäße Verfahren gegeben.

Es zeigen:
Figur 1 den erfindungsgemäßen Verfahrensablauf in schematischer Blockdarstellung;
Figur 2 die charakteristischen Verfahrensparameter eines Ausführungsbeispiels;
Figur 3 den schematischen Schnitt durch eine Vorrichtung zur Durchführung des erfindungsgemäßen Verfahrens.

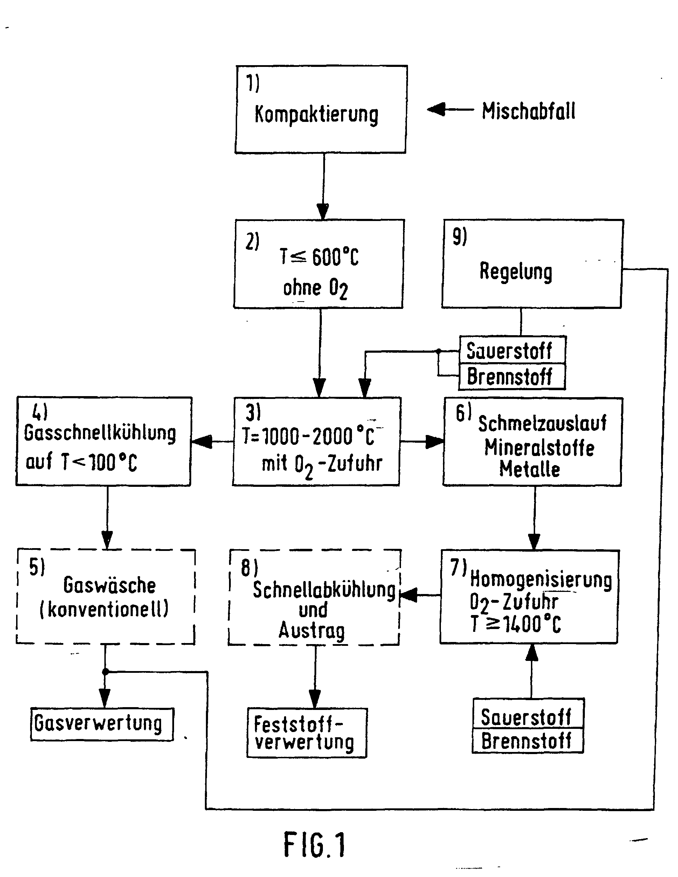

In Fig. 1 sind die Verfahrensschritte 1) bis 8) symbolisiert. Der Abfall wird ohne Vorbehandlung, d.h. ohne Sortierung und ohne Zerkleinerung, der Stufe 1) zugeführt, in der er kompaktiert wird. Hierbei wird das Kompaktierungsergebnis erheblich verbessert, wenn in vertikaler und in horizontaler Richtung Preßflächen wirken. Eine hohe Verdichtung ist notwendig, da die Beschickungsöffnung des Schubkanals, in dem die Verfahrensstufe 2) abläuft, durch den hochverdichteten Abfallpfropfen gasdicht verschlossen wird.

Der hochverdichtete Abfall durchläuft den Schubkanal der Stufe 2) unter Sauerstoffabschluß bei Temperaturen bis zu 600 °C. Organische Bestandteile des Abfalles werden entgast. Die Gase durchströmen die im Schubofen befindlichen Abfälle in Richtung der Verfahrensstufe 3). Sie tragen bei diesem Durchströmen ebenso zu einem guten Wärmeübergang bei wie der intensive Druckkontakt des Abfalles mit den Schubofenwänden. Infolge des stetigen Nachschiebens des hochverdichteten Abfalles bleibt dieser Druckkontakt über die ganze Ofenlänge und die Gesamtheit der Kanalflächen erhalten, so daß am Ende des Abfalldurchlaufes durch den Schubkanal die Entgasung der organischen Substanzen weitgehend abgeschlossen ist.

Schwelgase, Wasserdampf, wie er aus der natürlichen Abfallfeuchte herrührt, Metalle, Mineralien und der Kohlenstoff der entgasten Organika werden gemeinsam der Verfahrensstufe 3) zugeführt, in der zunächst der Kohlenstoff mit Sauerstoff verbrannt wird. Die hierbei auftretenden Temperaturen von bis zu 2000 °C und mehr schmelzen die metallischen und mineralischen Bestandteile auf, so daß sie in dem Verfahrensschritt 6) schmelzflüssig ausgetragen werden können.

Parallel dazu werden über dem Hochtemperaturbereich des glühenden Kohlenstoffbettes bei Temperaturen von mehr als 1200 °C die organischen Verbindungen der Schwelgase zerstört. Infolge der Reaktionsgleichgewichte von C, CO₂, CO und H₂O bei diesen Temperaturen bildet sich Synthesegas, im wesentlichen aus CO, H₂ und CO₂ bestehend, das im Verfahrensschritt 4) schockartig auf Temperaturen unter 100 °C abgekühlt wird. Die Schnellabkühlung verhindert die Neubildung von organischen Schadstoffen und erleichtert die in Stufe 5) vorgesehene Gaswäsche. Das hochreine Synthesegas steht danach zu beliebiger Verwendung zur Verfügung.

Das hochreine Synthesegas kann bei dem insoweit bekannten Verfahren einen von der Abfallzusammensetzung und Menge abhängigen Volumenstrom und auch eine variierende Konzentration an Wasserstoff aufweisen. Daher wird nach der Gaswäsche 5) der Wasserstoffgehalt des aufgereinigten Synthesegases bestimmt und diese Werte einer Regelung 9) zugeführt. Diese Regelung steuert nunmehr, wie oben beschrieben, die Zufuhr an Sauerstoff in die Verfahrensstufe 3), bei der der vorher entgaste Abfall bei Temperaturen von bis zu 2000 °C durch Zugabe von O₂ vergast wird. Durch diese Änderung des der Sauerstoffzufuhr kann der Wasserstoffgehalt des entstehenden Synthesegases beeinflußt werden. Durch diese Regelung steht daher der Gasverwertung im Anschluß an die Gaswäsche 5) ein Synthesegasstrom mit geregeltem konstantem Wasserstoffgehalt zur Verfügung.

Die im Verfahrensschritt 6) schmelzflüssig ausgetragenen Metalle und Mineralstoffe werden zweckmäßigerweise im Verfahrensschritt 7) einer Nachbehandlung unter Sauerstoffzufuhr bei mehr als 1400 °C unterzogen. Hierbei werden mitgeschleppte Kohlenstoffreste beseitigt und die Mineralisierung abgeschlossen. Der Austrag der Feststoffe, beispielsweise in ein Wasserbad, schließt im Verfahrensschritt 8) das Entsorgungsverfahren ab. In dem nach dem Austrag der Feststoffe in ein Wasserbad erhaltenem Granulat befinden sich Metalle und Legierungselemente und vollständig mineralisierte Nichtmetalle nebeneinander. Eisenlegierungen können magnetisch abgeschieden werden. Die auslaugungsfest mineralisierten Nichtmetalle können vielseitig wiederverwendet werden, beispielsweise in geblähter Granulatform oder - zu Steinwolle verarbeitet - als Isolierstoff oder direkt als Granulat für Füllstoffe im Straßenbau und bei der Betonherstellung.

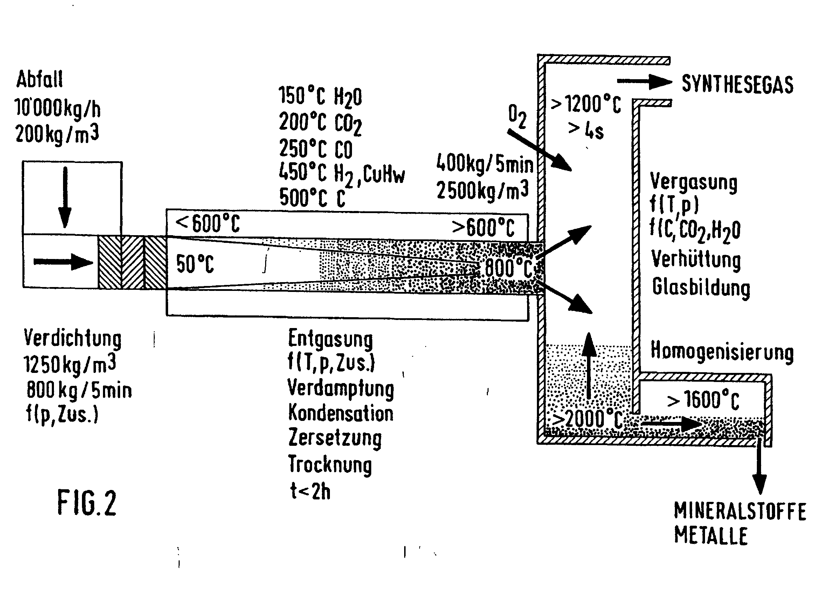

Fig. 2 zeigt eine stark schematisierte Darstellung einer Vorrichtung zur Durchführung des erfindungsgemäßen Verfahrens. Den einzelnen Bereichen sind typische Prozeßdaten einer beispielsweisen vorteilhaften Verfahrensdurchführung zugeordnet. Die Entgasung ist eine Funktion der Temperatur T, des Druckes und der Abfallzusammensetzung.

Die Zusammensetzung und der Volumenstrom hängt nunmehr vom vorhandenen Kohlenstoff, Sauerstoff und Wasserdampf ab. Indem über die Regelung die Menge an zur Verfügung stehendem Kohlenstoff (Brennstoffzufuhr zur Gasphase) und Sauerstoff (Sauerstoffzufuhr über Sauerstofflanzen in die Gasphase) gesteuert wird, wird die Zusammensetzung des Synthesegases, die bereits bei dem bekannten Verfahren eine relativ hohe Qualität besitzt, weiter optimiert und eignet sich daher ideal zur Verwendung z.B. in Gasmotoren zur Verstromung oder für chemische Prozesse.

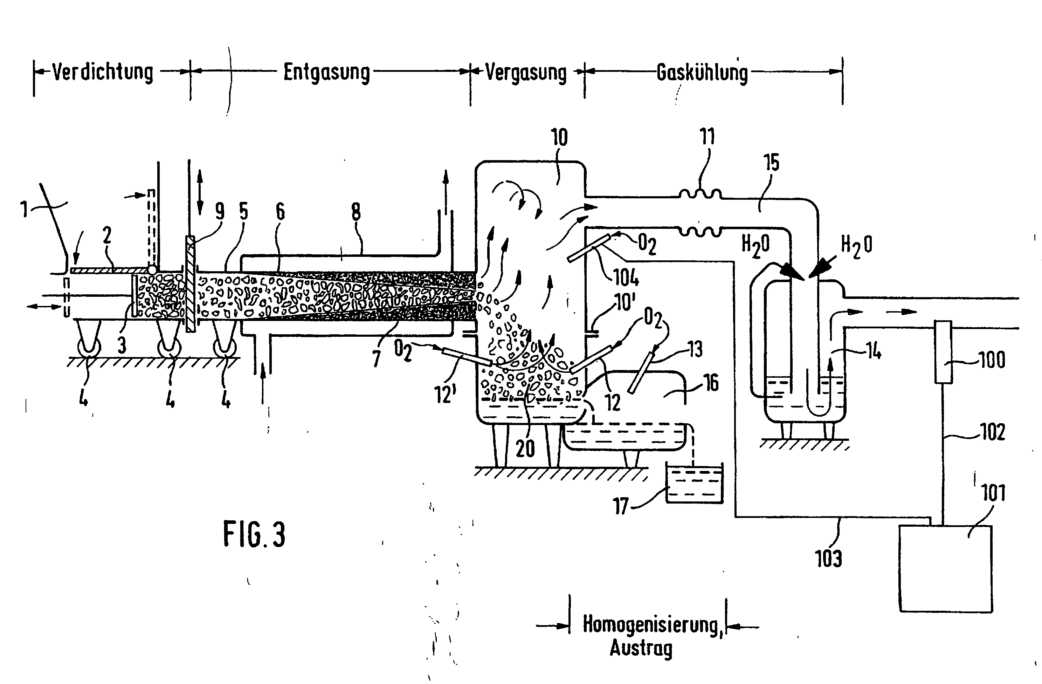

In Fig. 3 entspricht die Verdichtungspresse 1 in Ihrem Aufbau einer an sich bekannten Schrottpresse, wie sie z.B. für die Verschrottung von Fahrzeugen eingesetzt wird. Die schwenkbare Preßplatte 2 ermöglicht in senkrecht (gestrichelter) Darstellung das Beschikken der Presse 1 mit Mischabfall. Die Preßfläche 3 befindet sich in linker Position, so daß der Beschikkungsraum der Presse voll geöffnet ist. Durch das Einschwenken der Preßplatte 2 in die dargestellte horizontale Position wird der Abfall zunächst in vertikaler Richtung verdichtet. Danach bewegt sich die Preßfläche 3 horizontal in die in ausgezogener Linienführung dargestellte Lage und verdichtet das Abfallpaket in horizontaler Richtung. Die hierzu benötigten Gegenkräfte werden durch die in Pfeilrichtung aus- und einfahrbare Gegenplatte 9 aufgenommen. Nachdem der Verdichtungsvorgang abgeschlossen ist, wird die Gegenplatte 9 ausgefahren und der verdichtete Abfallpfropfen mit Hilfe der sich nach rechts weiterbewegenden Preßfläche 3 in den unbeheizten Bereich 5 des Schubofens 6 eingeschoben und so dessen Gesamtinhalt entsprechend weitertransportiert, nachverdichtet und mit der Kanal- bzw. Ofenwand in Druckkontakt gehalten. Anschließend wird die Preßfläche 3 in die linke Endposition zurückgefahren, die Gegenplatte 9 eingefahren und die Preßplatte 2 in die gestrichelt dargestellte Vertikalposition zurückgeschwenkt. Die Verdichtungspresse 1 ist für eine Neubeschickung bereit. Die Abfallverdichtung ist so groß, daß der in den unbeheizten Bereich 5 des Schubofens 6 eingeschobene Abfallpfropfen gasdicht ist. Die Beheizung des Schubofens erfolgt durch Flamm- und/oder Abgase, die den Heizmantel 8 in Pfeilrichtung durchströmen.

Beim Durchschub des verdichteten Abfalles durch den Ofenkanal 6 breitet sich die entgaste Zone 7 in der dargestellten Weise zur Mittelebene des Schubofens 6 hin aus, begünstigt durch die mit dem Seiten/Höhen-Verhältnis >2 seines Rechteckquerschnittes verbundene große Oberfläche. Beim Eintritt in den Hochtemperaturreaktor 10 liegt ein durch ständige Druckbeaufschlagung beim Durchschub kompaktiertes Gemisch von Kohlenstoff, Mineralien und Metallen vor. Dieses Gemisch wird im Bereich der Eintrittsöffnung in den Hochtemperaturreaktor extrem großer Strahlungshitze ausgesetzt. Die hiermit verbundene plötzliche Expansion von Restgasen im Schwelgut führt zu dessen stükkiger Zerteilung. Das so erhaltene Feststoff-Stückgut bildet im Hochtemperaturreaktor ein gasdurchlässiges Bett 20, in dem der Kohlenstoff des Schwelgutes mit Hilfe von Sauerstofflanzen 12 zunächst zu CO₂ bzw.

CO verbrannt wird. Die oberhalb des Bettes 20 den Reaktor 10 verwirbelt durchströmenden Schwelgase werden durch Cracken vollständig entgiftet. Zwischen C, CO₂, CO und dem aus dem Abfall ausgetriebenen Wässerdampf stellt sich ein temperaturbedingtes Reaktionsgleichgewicht bei der Synthesegasbildung ein. Die sich ergebenden Temperaturen entsprechen der Darstellung der Fig. 2. Das Synthesegas wird im Behälter 14 durch Wassereindüsung auf weniger als 100 °C schockartig gekühlt. Im Gas mitgeschleppte Bestandteile (Mineralien und/oder Metall in geschmolzenem Zustand) werden im Kühlwasser abgeschieden, Wasserdampf kondensiert, so daß sich das Gasvolumen verringert und so die Gasreinigung erleichtert wird, die sich an die Schockkühlung in an sich bekannten Anordnungen anschließen kann. Das zur schockartigen Kühlung des Synthesegasstromes verwendete Wasser kann gegebenenfalls nach Aufreinigung wiederum zur Kühlung verwendet werden.

Die Regelung des Wasserstoffgehaltes erfolgt über eine in dem abgeleiteten Synthesegasstrom angeordneten Sensor 100, der Signale über eine Leitung 102 an eine Regelvorrichtung 101 weiterleitet. Die Signale enthalten sowohl den aktuellen Wasserstoffgehalt des abgekühlten, gereinigten und abgeleiteten Synthesegasstromes. Die Regelung verändert nun die mittels der Steuersignalleitung 103, die zwischen der Steuerung 101 und einer Sauerstofflanze 104 angeordnet ist, die Zufuhr von Sauerstoff durch die Sauerstofflanze 104 in die Gasphase über der Schüttung 20. Durch eine Erhöhung der Sauerstoffzufuhr kann dabei eine erhöhte Verbrennung von H₂ und damit ein niedrigerer Wasserstoffgehalt im Synthesegas erzeugt werden. Durch eine Erniedrigung der Sauerstoffzufuhr über die Sauerstofflanze 104 wird die Verbrennung in der Gasphase verringert und damit steigt der Wasserstoffgehalt in dem Synthesegas. Ist der Volumenstrom des Synthesegases nicht ausreichend, so kann von der Steuerung 101 auch die Zufuhr von Brenngasen, wie beispielsweise Erdgas oder Synthesegas selbst in die Schüttung 20 oder auch in die Gasphase vergrößert oder verringert werden. Damit wird der Gehalt an Kohlenwasserstoffen in dem Reaktor geändert und folglich der Gesamtsynthesegas-Volumenstrom beeinflußt.

In dem mehr als 2000 °C heißen Kernbereich des Bettes 20 werden die mineralischen und metallischen Bestandteile des Schwelgutes aufgeschmolzen. Aufgrund der unterschiedlichen Dichte überschichten sie sich dabei und entmischen sich. Typische Legierungselemente des Eisens, wie beispielsweise Chrom, Nickel und Kupfer, bilden mit dem Eisen des Abfalles eine verhüttbare Legierung, andere Metallverbindungen bzw. Aluminium oxidieren und stabilisieren als Oxide die Mineralschmelze.

Die Schmelzen treten direkt in den Nachbehandlungsreaktor 16 ein, in dem sie in einer mit Hilfe der O₂-Lanze 13 eingebrachten Sauerstoffatmosphäre, gegebenenfalls unterstützt durch nicht dargestellte Gasbrenner Temperaturen von mehr als 1400 °C ausgesetzt werden. Mitgeschleppte Kohlenstoffpartikel werden oxidiert, die Schmelze wird homogenisiert und in ihrer Viskosität erniedrigt.

Bei ihrem gemeinsamen Austrag in das Wasserbad 17 granulieren Mineralstoff und Eisenschmelze getrennt und können danach magnetisch sortiert werden.

In Fig. 3 ist die Lage des Nachbehandlungsreaktors 16 aus Gründen der Übersichtlichkeit um 90° versetzt gezeichnet. Dieser Reaktor 16 bildet mit dem Unterteil des Hochtemperaturreaktors 10 eine Baueinheit, die nach dem Lösen einer Flanschverbindung 10' zu Wartungs- und Reparaturzwecken seitlich aus der Vorrichtungslinie ausfahrbar ist.

Die in Fig. 3 dargestellte, im wesentlichen fluchtend angeordnete Vorrichtungslinie erstreckt sich über eine erhebliche Länge. Wechselnde Temperaturen - vor allem beim An- und Herunterfahren der Anlage in das und aus dem thermischen Gleichgewicht - führen zu erheblichen Wärmedehnungen. Bei ortsfester Anordnung des Hochtemperaturreaktors 10 wird dies für den Schubofen 6 und die mit ihm verbundene Verdichtungspresse 1 durch die Rollen 4 berücksichtigt, die in Führungsschienen laufend (nicht dargestellt), nicht nur Längsbewegungen ermöglichen, sondern auch Seitenkräfte aufnehmen können. Bei den vom Hochtemperaturreaktor abgehenden Rohrleitungen (beispielsweise 15) sorgen Faltenbälge 11 für den Dehnungsausgleich.

## Patentansprüche

1. Verfahren zur Entsorgung und Nutzbarmachung von Abfallgütern aller Art, bei dem unsortierter, unbehandelter, beliebige Schadstoffe in fester und/oder flüssiger Form enthaltender Industrie-, Haus-und/oder Sondermüll sowie Industriegüterwracks einer stufenweisen Temperaturbeaufschlagung und thermischen Trennung bzw. Stoffumwandlung unterzogen werden und die anfallenden festen Rückstände in eine Hochtemperaturschmelze überführt werden, wobei das Entsorgungsgut chargenweise zu Kompaktpaketen komprimiert, die Temperaturbehandlungsstufen in Richtung steigender Temperatur mit mindestens einer Niedertemperaturstufe, in der unter Aufrechterhaltung der Druckbeaufschlagung ein form- und kraftschlüssiger Kontakt mit den Wänden des Reaktionsgefäßes sichergestellt ist, und mit mindestens einer Hochtemperaturzone, in der das Entsorgungsgut eine gasdurchlässige Schüttung ausbildet und Synthesegas erzeugt wird, durchläuft, wobei das erzeugte Synthesegas aus der Hochtemperaturzone abgeleitet wird,
**dadurch gekennzeichnet,**
**daß** die Konzentration an Wasserstoff in dem abgeleiteten Synthesegas geregelt wird mit der Maßgabe, daß die Konzentration an Wasserstoff im abgeleiteten Synthesegas auf einen als konstant anzusehenden Wert geregelt wird.

2. Verfahren nach Anspruch 1, **dadurch gekennzeichnet, daß** die Konzentration an Wasserstoff im abgeleiteten Synthesegas auf ca. 35 Vol.% geregelt wird.

3. Verfahren nach einem der vorhergehenden Ansprüche, **dadurch gekennzeichnet, daß** in Abhängigkeit von der Wasserstoffkonzentration in dem abgeleiteten Synthesegas zusätzlich Sauerstoff in die Hochtemperaturstufe eingeleitet wird.

4. Verfahren nach dem vorhergehenden Anspruch, **dadurch gekennzeichnet, daß** der Sauerstoff in die Hochtemperaturstufe über Sauerstofflanzen eingeleitet wird.

5. Verfahren nach einem der beiden vorhergehenden Ansprüche, **dadurch gekennzeichnet, daß** der Sauerstoff pulsweise eingeleitet wird.

6. Verfahren nach einem der vorhergehenden Ansprüche, **dadurch gekennzeichnet, daß** in Abhängigkeit vom Volumenstrom zusätzlich Brennstoff in die Hochtemperaturstufe eingeleitet wird.

7. Verfahren nach einem der vorhergehenden Ansprüche, **dadurch gekennzeichnet, daß** zumindest die Niedertemperaturstufe, unter Aufrechterhaltung der Druckbeaufschlagung in form- und kraftschlüssigem Kontakt mit den Wänden des Reaktorgefäßes unter Sauerstoffausschluß durchlaufen wird.

8. Verfahren nach einem der vorhergehenden Ansprüche, **dadurch gekennzeichnet, daß** die Niedertemperaturstufe im Temperaturbereich zwischen 100 °C und 600 °C durchlaufen wird.

9. Verfahren nach einem der vorhergehenden Ansprüch, **dadurch gekennzeichnet, daß** die Hochtemperaturstufe unter Sauerstoffzugabe durchlaufen wird.

10. Verfahren nach dem vorhergehenden Anspruch, **dadurch gekennzeichnet, daß** die Kohlenstoffanteile in der Schüttung durch dosierte Zugabe von Sauerstoff zu Kohlendioxid und Kohlenmonoxid vergast werden, wobei das Kohlendioxid beim Durchdringen der kohlenstoffhaltigen Schüttung in Kohlenmonoxid reduziert wird und daß aus dem Kohlenstoff und hocherhitztem Wasserdampf Wasserstoff und Kohlenmonoxid entstehen.

11. Verfahren nach einem der vorhergehenden Ansprüche, **dadurch gekennzeichnet, daß** die Hochtemperaturstufe bei Temperaturen von mehr als 1000 °C durchlaufen wird.

12. Verfahren nach einem der vorhergehenden Ansprüche, **dadurch gekennzeichnet, daß** das abgeleitete Synthesegas unmittelbar nach Verlassen des Hochtemperaturreaktors einer schockartigen Wasserbeaufschlagung bis zur Abkühlung unter 100 °C unterworfen und dabei entstaubt wird.

13. Verfahren nach einem der vorhergehenden Ansprüche, **dadurch gekennzeichnet, daß** der Gehalt an Wasserstoff nach der schockartigen Kühlung bestimmt und dementsprechend der Gehalt an Wasserstoff des abgeleiteten Synthesegases geregelt wird.

14. Vorrichtung zur Stoffaufbereitung, -wandlung und -nachbehandlung von Entsorgungsgut aller Art mit mehreren thermischen Behandlungsstufen, die mindestens eine Niedertemperaturstufe unter Sauerstoffabschluß und mindestens eine Hochtemperaturstufe unter Sauerstoffzufuhr bei Temperaturen über 1000 °C umfassen, sowie mit einem Auslaß für das in der Hochtemperaturstufe erzeugte Synthesegasgemisch, wobei alle Reaktionsräume der Behandlungsstufen schleusenfrei fest miteinander verbunden sind und in der Hochtemperaturstufe Vorrichtungen zum Einspeisen von Sauerstoff und Vorrichtungen zum Einspeisen von Brennstoff vorgesehen sind,
**dadurch gekennzeichnet**
**daß** an dem Auslaß für das Synthesegasgemisch Sensoren zur Bestimmung des Gehalts an Wasserstoff angeordnet sind, die mit einer Steuervorrichtung für die Menge des eingespeisten Sauerstoffs und/oder Brennstoffes verbunden sind.

15. Vorrichtung nach dem vorhergehenden Anspruch, **dadurch gekennzeichnet, daß** die Gasaustrittsseite der Hochtemperaturstufe mit einer Gasschnellkühlung verbunden ist, die eine Wasserinjektionseinrichtung für Kaltwasser in den heißen Strom des Synthesegasgemisches aufweist.

16. Vorrichtung nach einem der beiden vorhergehenden Ansprüche, **dadurch gekennzeichnet, daß** der Auslaß für das Synthesegas eine Drosseleinrichtung, beispielsweise eine regelbare Drosselklappe, aufweist.

17. Vorrichtung nach einem der Ansprüche 14 bis 16, **dadurch gekennzeichnet, daß** dem Auslaß für das Synthesegasgemisch eine Einrichtung zur Gasreinigung vorgelagert oder nachgeordnet ist.

18. Vorrichtung nach einem der Ansprüche 14 bis 17, **dadurch gekennzeichnet, daß** dem Auslaß für das Synthesegasgemisch eine Einrichtung zur Gasverwertung, beispielsweise eine Gasmotor-Generator-Kombination, Gasturbine, Dampferzeuger oder dergleichen, nachgeordnet ist.

19. Vorrichtung nach einem der Ansprüche 14 bis 18, **dadurch gekennzeichnet, daß** der Reaktionsraum für die Niedertemperaturstufe ein horizontal angeordneter, außen beheizter Schubofen rechteckigen Querschnittes ist, dessen Verhältnis Ofenbreite zu Ofenhöhe größer zwei ist, wobei die Ofenlänge durch die Beziehung L_{Ofen} ≥ 15 √F_{Ofen} gegeben ist, mit F_{Ofen} als Querschnittsfläche des Schubofens.

20. Vorrichtung nach einem der Ansprüche 14 bis 19, **dadurch gekennzeichnet, daß** der Reaktionsraum für die Hochtemperaturstufe als vertikaler Schachtofen ausgebildet ist, in den oberhalb seines Bodens der Reaktionsraum für die Niedertemperaturstufe unterbrechungslos angekoppelt ist.

21. Verwendung einer Vorrichtung nach einem der Ansprüche 14 bis 20, **dadurch gekennzeichnet, daß** nach Synthesegastrennung oder -konditionierung Wasserstoff in Wasserstoffmotoren oder Brennstoffzellen und/oder das Synthesegas zur stofflichen Nutzung eingesetzt wird.

## Claims

1. Method for disposal and utilisation of all kinds of waste products where unsorted, untreated industrial, domestic and/or special waste containing any harmful substance in solid and/or liquid form as well as industrial goods scrap are subjected to thermal separation or material conversion and obtained solid remnants are transferred into a high temperature furnace, and the disposed material is in charges compressed into compact packets and passed through temperature treatment stages in the direction of increasing temperature with at least one low temperature stage where, whilst maintaining the pressure application, a shape and positive contact to the walls of the reaction vessel is ensured, and with at least one high temperature zone where the disposed good forms a gas permeable bulk and synthetic gas is produced, and produced synthetic gas is diverted from the high temperature zone, **characterised in that** the concentration of hydrogen in the diverted synthetic gas is regulated so that the concentration of hydrogen in the diverted synthetic gas is regulated to a value which is seen as constant.

2. Method according to Claim 1, **characterised in that** the hydrogen concentration in diverted synthetic gas is regulated to approximately 35 %-vol.

3. Method according to one of the above claims, **characterised in that** in dependence of the hydrogen concentration in the diverted synthetic gas oxygen is additionally introduced into the high temperature stage.

4. Method according to one of the above claim, **characterised in that** the oxygen is introduced into the high temperature stage via oxygen lances.

5. Method according to one of the two above claims, **characterised in that** oxygen is introduced by way of pulses.

6. Method according to one of the above claims, **characterised in that** in dependence of the volume flow fuel is additionally introduced into the high temperature stage.

7. Method according to one of the above claims, **characterised in that** at least the low temperature stage is, whilst maintaining pressure in shape and positive contact with the walls of the reactor vessel, passed through to the exclusion of oxygen.

8. Method according to one of the above claims, **characterised in that** the low temperature stage is passed through in a temperature range between 100°C and 600°C.

9. Method according to one of the above claims, **characterised in that** the high temperature stage is passed through with added oxygen.

10. Method according to the above claim, **characterised in that** carbon portions in the bulk are gasified by apportioned addition of oxygen to carbon dioxide and carbon monoxide, and carbon dioxide is, whilst passing through the carbon containing bulk, reduced to carbon monoxide, and hydrogen and carbon monoxide are produced from the carbon and highly heated water vapour.

11. Method according to one of the above claims, **characterised in that** the high temperature stage is passed through at temperatures of more than 1,000°C.

12. Method according to one of the above claims, **characterised in that** diverted synthetic gas is directly after departure from the high temperature reactor subjected to a shocklike water charge until cooled to below 100°C and dusted.

13. Method according to one of the above claims, **characterised in that** the content of hydrogen is verified after shocklike cooling, and accordingly the hydrogen content of diverted synthetic gas is regulated.

14. Device for material processing, conversion and final treatment of all types of waste products by way of a plurality of thermal treatment stages which include at least one low temperature stage under exclusion of oxygen and at least one high temperature stage under oxygen delivery at temperatures above 1,000°C, and with an outlet for a synthetic gas mixture generated in the high temperature stage, and all reaction areas of the treatment stages are free of locks and firmly connected to each other, and in the high temperature stage are provided devices for feeding oxygen and devices for feeding fuel, **characterised in that** at the synthetic gas mixture outlet are arranged sensors for determining the hydrogen content which are connected to a control device for the quantity of fed oxygen and/or fuel.

15. Device according to the above claim, **characterised in that** the gas outlet side of the high temperature stage is connected to a rapid gas cooler which comprises a water injector for cold water into the hot stream of synthetic gas mixture.

16. Device according to one of the two above claims, **characterised in that** the synthetic gas outlet comprises a throttle device, for example a controllable throttle flap.

17. Device according to one of Claims 14 to 16, **characterised in that** upstream or downstream of the synthetic gas mixture outlet is arranged a device for gas purification.

18. Device according to one of Claims 14 to 17, **characterised in that** downstream of the synthetic gas mixture is provided a device for gas utilisation, for example a gas motor/generator combination, a gas turbine, steam generator or the like.

19. Device according to one of Claims 14 to 18, **characterised in that** the reaction area for the low temperature stage is a horizontally arranged, externally heated thrust furnace of rectangular cross-section, its ratio from furnace width to furnace height is greater than two, and the furnace length is given by the equation L_{Furnace} ≥ 15 √F_{Furnace}, with F_{Furnace} as cross-sectional surface of the thrust furnace.

20. Device according to one of Claims 14 to 19, **characterised in that** the reaction area for the high temperature stage is designed as a vertical shaft furnace wherein above its bottom the reaction area for the low temperature stage is continuously connected.

21. Use of a device according to one of Claims 14 to 20, **characterised in that,** following synthetic gas separation or conditioning, hydrogen is used in hydrogen motors or fuel cells and/or synthetic gas is used for material use.

## Revendications

1. Procédé d'élimination et de valorisation de déchets de tous types, selon lequel des déchets industriels, des déchets ménagers et/ou des déchets spéciaux ainsi que des épaves de biens industriels, non triés, non traités et contenant des substances nocives quelconques sous une forme solide et/ou liquide, sont soumis à une charge thermique échelonnée et à une séparation thermique ou à une conversion thermique de matière et les résidus fixes obtenus sont transformés en une masse fondue à haute température, et selon lequel le matériau à éliminer est comprimé selon des lots pour former des paquets compacts, traverse les étages de traitement thermique dans le sens d'une température croissante avec au moins un étage à basse température, dans lequel moyennant le maintien de la charge de pression, un contact selon une liaison par formes complémentaires et selon une liaison de force avec les parois de l'enceinte réactionnelle est garanti, et avec au moins une zone à haute température, dans laquelle le produit à éliminer forme une accumulation en vrac perméable au gaz et au gaz de synthèse produit, le gaz de synthèse produit étant dérivé de la zone à haute température, **caractérisé en ce que** la concentration en hydrogène dans le gaz de synthèse évacué est réglée avec la détermination du fait que la concentration en hydrogène dans le gaz de synthèse dérivé est réglée à une valeur devant être considérée comme constante.

2. Procédé selon la revendication 1, **caractérisé en ce que** la concentration en hydrogène dans le gaz de synthèse évacué est réglée à environ 35 % en volume.

3. Procédé selon l'une des revendications précédentes, **caractérisé en ce qu'**en fonction de la concentration en hydrogène dans le gaz de synthèse obtenu, on introduit en supplément de l'oxygène dans l'étape à haute température.

4. Procédé selon l'une des revendications précédentes, **caractérisé en ce qu'**on introduit l'oxygène, dans l'étape à haute température, au moyen de lances à oxygène.

5. Procédé selon l'une des revendications précédentes, **caractérisé en ce qu'**on introduit l'oxygène de façon impulsionnelle.

6. Procédé selon l'une des revendications précédentes, **caractérisé** qu'en fonction du flux volumique, on introduit en outre du combustible lors de l'étape à haute température.

7. Procédé selon l'une des revendications précédentes, **caractérisé en ce qu'**au moins l'étape à basse température est exécutée en maintenant la charge de pression avec un contact selon une liaison par formes complémentaires et selon une liaison de force avec les parois de l'enceinte du réacteur en excluant l'oxygène.

8. Procédé selon l'une des revendications précédentes, **caractérisé en ce que** l'étape à basse température est exécutée dans une gamme de température comprise entre 100°C et 600°C.

9. Procédé selon l'une des revendications précédentes, **caractérisé en ce que** l'étape à haute température est exécutée moyennant l'adjonction d'oxygène.

10. Procédé selon la revendication précédente, **caractérisé en ce que** les composantes de carbone dans l'accumulation en vrac sont gazéifiées par adjonction dosée d'oxygène pour former du gaz carbonique et du monoxyde de carbone, le gaz carbonique étant réduit en monoxyde de carbone lorsqu'il traverse l'accumulation en vrac contenant du carbone, et que de l'hydrogène et du monoxyde de carbone sont produits à partir du carbone et de la vapeur d'eau fortement chauffée.

11. Procédé selon l'une des revendications précédentes, **caractérisé en ce que** l'étape à haute température est exécutée à une température supérieure à 1000°C.

12. Procédé selon l'une des revendications précédentes, **caractérisé en ce que** le gaz de synthèse dérivé est soumis, directement après avoir quitté le réacteur à haute température, à une charge brusque par de l'eau jusqu'à l'obtention d'un refroidissement au-dessous de 100°C et est alors dépoussiéré.

13. Procédé selon l'une des revendications précédentes, **caractérisé en ce que** la teneur en hydrogène est déterminée après le refroidissement sous forme de choc et que par conséquent la teneur en hydrogène du gaz de synthèse dérivé est réglée de façon correspondante.

14. Procédé de traitement, de conversion et de post-traitement de matériaux à éliminer de tous types comportant plusieurs étapes de traitement thermique, qui comprennent au moins une étape à basse température avec interruption d'oxygène et au moins une étape de traitement à haute température avec apport d'oxygène à des températures dépassant 1000°C, ainsi qu'une sortie pour le mélange de gaz de synthèse produit dans l'étage à haute température, toutes les enceintes réactionnelles des étapes de traitement étant reliées de façon fixe entre elles sans aucun sas, et que dans la phase à haute température des dispositifs pour introduire de l'oxygène et des dispositifs pour introduire un combustible sont prévus dans l'étape à haute température, **caractérisé en ce que** sur la sortie du mélange de gaz de synthèse sont disposés des capteurs servant à déterminer la teneur en hydrogène, et qui sont reliés à un dispositif de commande de la quantité d'oxygène introduite et/ou de combustible introduit.

15. Dispositif selon l'une des revendications précédentes, **caractérisé en ce que** le côté de sortie du gaz de l'étape à haute température est relié à un refroidissement rapide du gaz, qui comporte un dispositif d'injection d'eau pour l'eau froide dans le courant chaud du mélange de gaz de synthèse.

16. Procédé selon l'une des revendications précédentes, **caractérisé en ce que** la sortie pour le gaz de synthèse comporte un dispositif d'étranglement, par exemple un volet d'étranglement réglable.

17. Dispositif selon l'une des revendications 14 à 16, **caractérisé en ce qu'**un dispositif d'épuration du gaz est disposé en amont ou en aval de la sortie pour le mélange de gaz de synthèse.

18. Dispositif selon l'une des revendications 14 à 17, **caractérisé en ce qu'**un dispositif pour l'exploitation du gaz, par exemple une combinaison moteur à gaz-générateur, une turbine à gaz, un générateur de vapeur ou analogue est disposé en aval de la sortie pour le mélange du gaz de synthèse.

19. Dispositif selon l'une des revendications 14 à 18, **caractérisé en ce que** l'enceinte réactionnel pour l'étape à basse température est un four poussant disposé horizontalement, qui est chauffé de l'extérieur et possède une section transversale rectangulaire et dont le rapport de la largeur à la hauteur est supérieur à deux, la longueur du four étant définie par la relation L_{four} ≥ 1,5 √ F_{four}, F_{four} étant la surface en coupe transversale du four poussant.

20. Dispositif selon l'une des revendications 14 à 19, **caractérisé en ce que** l'enceinte réactionnelle pour l'étape à haute température est agencée sous la forme d'un four tubulaire verticale, dans lequel la chambre de réaction pour l'étape à basse température est couplée sans interruption au-dessus du fond du four.

21. Utilisation d'un dispositif selon l'une des revendications 14 à 20, **caractérisée en ce qu'**après la séparation ou le conditionnement du gaz de synthèse on utilise de l'hydrogène dans des moteurs à hydrogène ou dans des piles à combustible et/ou le gaz de synthèse pour l'utilisation de matière.
